# EUROPEAN PATENT APPLICATION

(11) **EP 3 799 236 A1**
(43) Date of publication of application: **31.03.2021**
(21) Application number: 20198067.9
(22) Date of filing: 24.09.2020
(51) Int. Cl.: H02G 3/12, H02G 3/08

(54) **TELESCOPIC SPACER RING ASSEMBLY FOR ELECTRICAL INSTALLATION BOX**

(30) Priority: 26.09.2019 IN 201931038873
(71) Applicant: Schneider Electric Industries SAS, 92500 Rueil-Malmaison (FR)
(72) Inventor: NAYAK, Gireesh, 560067 Bangalore (IN); CHIKKANNA, Manohar, 560073 Bangalore (IN); VICKTORIUS, Richard, 50733 Köln (DE); NARAYANAN, Shree Ganesh, 51647 Gummersbach (DE)
(74) Representative: Swea IP Law AB

(57) **Abstract**

The present relates to a telescopic spacer ring assembly (100) for an electrical installation box (10) for flush installation, wherein said telescopic spacer ring assembly comprising a first ring member (102) attached to the box, a second ring member (104) abut on the wall, said second ring member is of substantially larger diameter than said first ring member, a fixing spacer member (106) assembled with said second ring member for fixation of multiple electrical inserts (12). First ring member is secured with threaded opening portion (36) of said box and configured to adjust the level of the box for different thickness of boards (14) on the wall by telescopic action and avoid any gap creation. Second ring member is provided with flat annular surface at its distal end for accommodating electrical inserts, said annular surface is provided with openings (110) of arcuate profile for aligning said inserts within the box.

## Description

### Field of invention

The present invention generally relates to a spacer ring assembly for installation boxes. More particularly the invention relates to a telescopic spacer ring assembly with telescopic mechanism for electrical installation box for adjusting the dimension of said electrical box while flush mounting said electrical installation box.

### Background of the invention

Installation boxes comprise of a distal end part provided with an essentially cylindrical compartment adapted for accommodating at least partially said electrical installation device i.e. electrical inserts. The compartment of an electrical installation box has a predetermined dimension of recess per se, for accommodating electrical equipment and installation device. The recess having dimensions across proximal end surface of said electrical installation box, which are larger than said external diameter of the essentially cylindrical compartment.

Installation boxes, such as wall or ceiling boxes, of the above-mentioned type are widely used behind board walls or ceilings. To allow the same installation box to be used for different spacing between the mounting base, on which the installation box is mounted, and the surface of the board wall or ceiling, adjustable spacers of a few predetermined heights are used. These spacers are generally cylindrical spacer rings adapted to be inserted to various degrees into the cylindrical compartment of the installation box and thereby adjusting the level of installation.

The installation boxes are typically mounted on a support member, the spacers placed in the cylindrical compartment and adjusted to height, then a magnetic locating device is placed in them, and finally they are covered entirely when the wall or ceiling board is mounted. The cylindrical shape of the compartment and the spacer makes it quite easy to uncover the installation box again when it is needed for the installation of an installation device such as a switch, a socket, a dimmer or the like which can also generally be referred as electrical inserts.

All the electrician needs to do is to locate the magnetic locating device using an appropriate seeker (e.g. a magnetic material or a magnet), and then drill a circular hole of a predetermined diameter corresponding to the dimension of the cylindrical mounting part and the spacer. The magnetic locating device can then be removed for reuse in another installation, upon which the installation device may be mounted by inserting it partially through the hole into the spacer and securing it thereto, the spacer thus serving as a receptacle for the installation device.

As to the installation devices there is a desire to construct them so that they do not protrude too far over the mounting surface, this *inter alia* makes the installation devices less prone to destruction from impacts, as they are less likely to get hit, but it also improves the aesthetic appearance.

However, to make the installation devices more flush with the mounting surface, e.g. not protruding more than a predefined amount from the mounting surface, in the following referred to as flush mounting, necessitates that a larger part of installation device, i.e. of the part comprising the mechanic, electric and electronic parts, is located within the installation box.

In an existing installation this is not an easy task because the diameters of the spacer matches that of the cylindrical compartment of the existing installation box, which, in turn, is located under the board and therefore cannot be replaced without destroying the board by making a large hole in it. For this purpose a support member is clipped with the existing installation box providing support to the installation box from the back side of the wall. Without the support member the flush installation of the installation box cannot withstand the push and pull forces of the sockets, switches and other external forces. Disadvantageously due to the use of the support member the existing spacer rings will not be able to provide the space or recess for accommodating electrical components (e.g. electrical inserts). Also the screwing system in existing spacer ring assembly is very complicated causing more time for installation of the electrical installation box. There exist no technical provisions for aligning the inserts with the installation condition of the installation box and in case of multiple boards attached with the wall of the room it is troublesome to achieve a flush installation of the installation box.

With a view therefore to overcome the drawbacks of the existing telescopic spacer ring assembly, the inventors felt the need of developing a novel spacer ring assembly for adjusting the level of the installation box for multiple dimensions of walls and wall-boards. The spacer ring assembly makes telescopic action inside the support member and thereby providing space for accommodating insert and ensures flush installation of the electrical installation box with lesser height of the aesthetics.

### Summary of the invention

Accordingly, the present invention provides telescopic spacer ring assembly for an electrical installation box for flush installation on a wall, said electrical installation box having a threaded opening portion, wherein said telescopic spacer ring assembly comprises:
- a first ring member attached to the electrical installation box;
- a second ring member to abut on the wall, said second ring member is of substantially larger diameter than said first ring member, and
- a fixing spacer member, assembled with said second ring member, for fixation of multiple electrical inserts,
wherein, said first ring member is secured with said threaded opening portion of said electrical installation box and configured to adjust the dimension of the electrical installation box relative to the abutting wall, by telescopic action, to commensurate with the thickness of boards on the wall,
and wherein said second ring member is provided with flat annular surface at its distal end for accommodating electrical inserts, said annular surface is provided with openings of arcuate profile for aligning said inserts within the electrical installation box.

According to one embodiment of the invention, said second ring member comprising a ring collar member at a proximal end for butting with the wall from the front side for rigid fixation of said telescopic spacer ring assembly.

According to one embodiment of the invention, said second ring member is provided with guiding ribs at its inner circumferential area for alignment and fixation of said electrical inserts. According to one object of the invention, said first ring member comprises of fastener receiving slots for attaching insert mounting screws connecting said first ring member with said second ring member.

According to one most preferred embodiment of the invention, said telescopic spacer ring assembly is attached to the electrical installation box along with a support member and mounted on a wall, said support member facilitates additional support to the electrical installation box to withstand pull out forces.

According to another object of the invention, wherein a space relief is provided in said telescopic ring assembly for accommodating said support member, said space relief is of matching profile with mating surface of said support member.

According to one embodiment of the invented telescopic spacer ring assembly for an electrical installation box for flush installation, said space relief is provided with two pairs of split holding clips at for accommodating various dimension of vertical screwing members to align the level of the electrical installation box, said split holding clips are adapted to removably attach with said support member.

According to another object of the invention, said fixing spacer member is resilient in nature and adapted to assemble inside the inner circumference of said second ring member with compression force.

According to yet another object of the invention, said fixing spacer member comprising guiding projection for mounting plurality of said electrical inserts.

According to one further object of the invention, the flat annular surface of said second ring member is provided with threaded receiving slots to attach screw members and adjusting the level of the electrical installation box from the wall by applying torsional force on said screw members.

According to one addition object and feature of the invented telescopic spacer ring assembly for an electrical installation box for flush installation the outer surface of the second ring member is provided with alternate planer surfaces to accommodate at least one spirit level for alignment of the telescopic spacer ring and said electrical inserts inside said electrical installation box.

These and other objects, features and advantages of the present invention will become apparent to those skilled in the art upon reading and understanding the detailed description of the invention set forth below, in conjunction with the drawings.

### Brief description of the drawings:

An embodiment of the invention will now be described with reference to the accompanying drawings. It will however be appreciated that the embodiment exemplified in the drawings are merely illustrative and not limitative to the scope of the invention, because it is quite possible, indeed often desirable, to introduce a number of variations in the embodiment that has been shown in the drawings.

In the accompanying drawings:
Figure 1 depicts the front view of one particular embodiment of electrical installation box with beam-fixing members and plurality of stubs attached to it.
Figure 2(a) depicts various components for electrical installation box assembly of flush mounting illustrating the installation on a beam from one side according to one preferred embodiment.
Figure 2(b) depicts various components for electrical installation box assembly of flush mounting illustrating the installation on a beam from another side according to one preferred embodiment.
Figure 3(a) is the back-side view of the invented telescopic spacer ring assembly showing various features thereof.
Figure 3(b) is the front-side view of the invented telescopic spacer ring assembly showing various features thereof.
Figure 4 depicts a perspective view of the resilient fixing spacer member disassembled from the invented telescopic spacer ring assembly.
Figures 5(a) and 5(b) depict the front and back view of the electrical installation box respectively with the support member and beam-fixing member attached to it according to one preferred embodiment of the invention.
Figures 6(a) and 6(b) depict the front and back view of the electrical installation box respectively with the invented telescopic spacer ring assembly attached to it along with support member and beam-fixing member according to one preferred embodiment of the invention.
Figure 7 shows an off-set alignment of fixing frame and electrical inserts installed inside the electrical installation box.
Figure 8 illustrates the horizontal alignment of fixing frame and electrical inserts installed inside the electrical installation box by means of the invented telescopic spacer ring assembly.
Figures 9(a), 9(b) and 9(c) are the side view of the electrical installation box assembly with the invented telescopic spacer ring assembly taking care of various wall and board thickness with telescopic mechanism.
Figures 10(a) and 10(b) depict the electrical installation box mounted on a wall with support member, beam-fixing member and invented telescopic spacer ring assembly from the back-side and the front-side respectively.
Figure 11 depicts a cross sectional top view of the installation box mounted on a wall with support member, beam-fixing member and invented telescopic spacer ring assembly.

### Detailed description of the invention

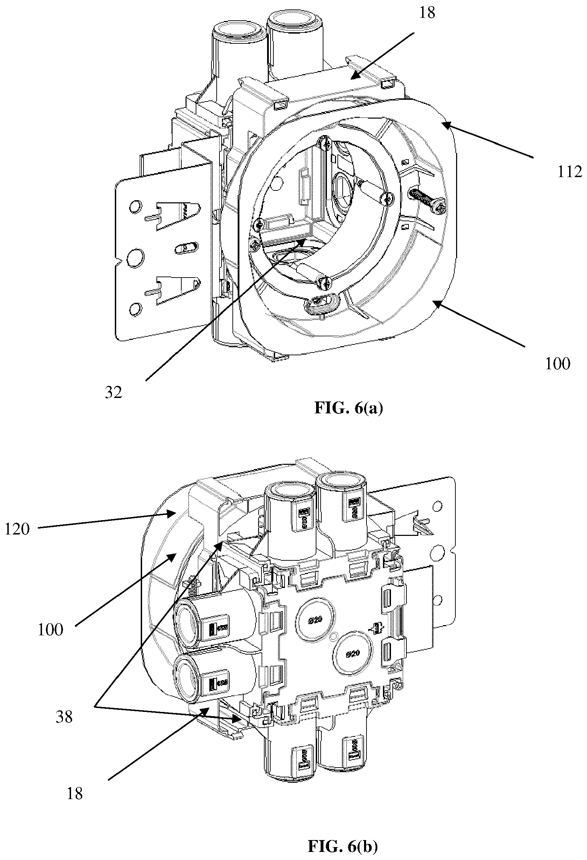

With reference to figures 6(a) and 6(b) of the accompanying drawings, invented telescopic spacer ring assembly (100) is attached with an electrical installation box (10) along with a support member (18) and a beam-fixing member (20) for flush installation on a wall. The beam-fixing member (20) is provided with a horizontal support projection for additional support required for flush installation. The support member (18) is kept attached with the electrical installation box (10) providing feedback force against any pushing or pulling force and also bearing the load of electrical inserts installed in the electrical installation box. The telescopic spacer ring assembly (100) is of matching profile with the support member (18) and beam-fixing member (20) in order to assemble together and mounted such that the installment of the electrical installation box (10) would not be projecting out of the wall i.e. flush mounting/installation.

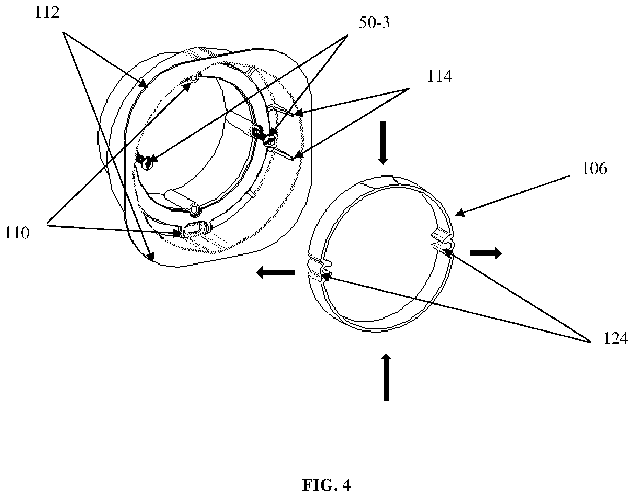

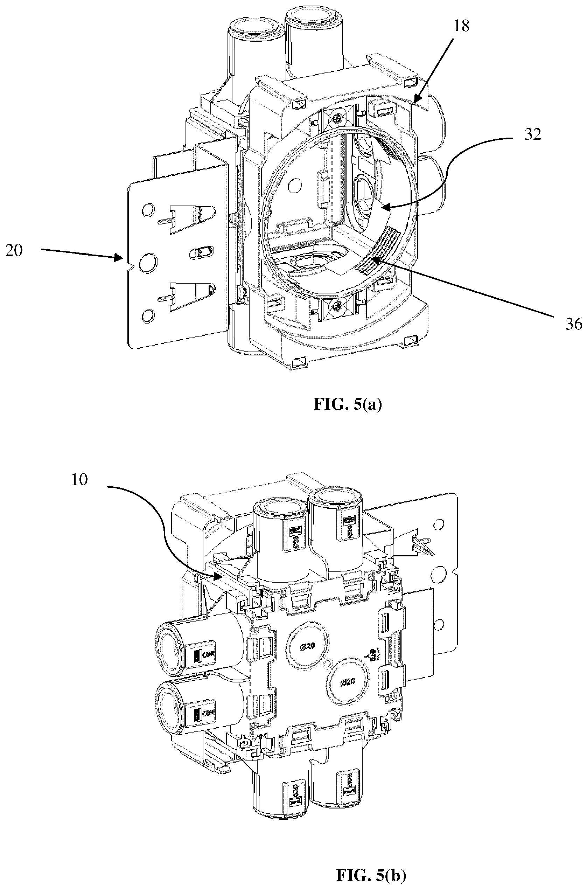

As shown in figures 4(a), 4(b) and 5 of the accompanying drawings, said telescopic spacer ring assembly (100) comprises a first ring member (102), a second ring member (104) and a fixing spacer member (106). The first ring member (102) is adopted so as to be attached to the electrical installation box (10) at the threaded opening portion (36). The second ring member (104) is of substantially larger diameter than said first ring member (102). The second ring member (104) is 5 to 50%, or 5 to 25% larger in diameter than said first ring member (102). The second ring member (104) is at least 10% larger in diameter than said first ring member (102). The second ring member (104) is at least 20 or 25% larger in diameter than said first ring member (102). The second ring member (104) is 5 to 50% larger in diameter than said first ring member (102). A projection i.e. a collar member (112) of the second ring member (104) is abutting on the wall which provides robust support of the electrical installation box (10). The fixing spacer member (106) is assembled with said second ring member (104) for fixation of multiple electrical inserts (12),

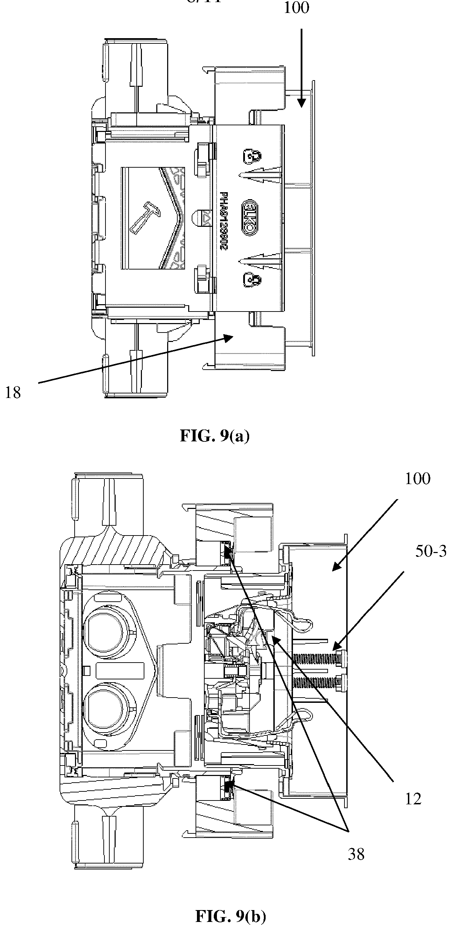

According to figures 4(a) and 9(b), said first ring member (102) is secured with threaded opening portion (36) of said electrical installation box (10) and configured to adjust the dimension of the electrical installation box (10) for different thickness of boards (14) on the wall by telescopic action and avoid any gap creation in between. The second ring member (104) is provided with flat annular surface (108) at its distal end for accommodating electrical inserts (12), said annular surface (108) is provided with oblong holes (110) of arcuate profile for aligning said inserts within the electrical installation box (110).

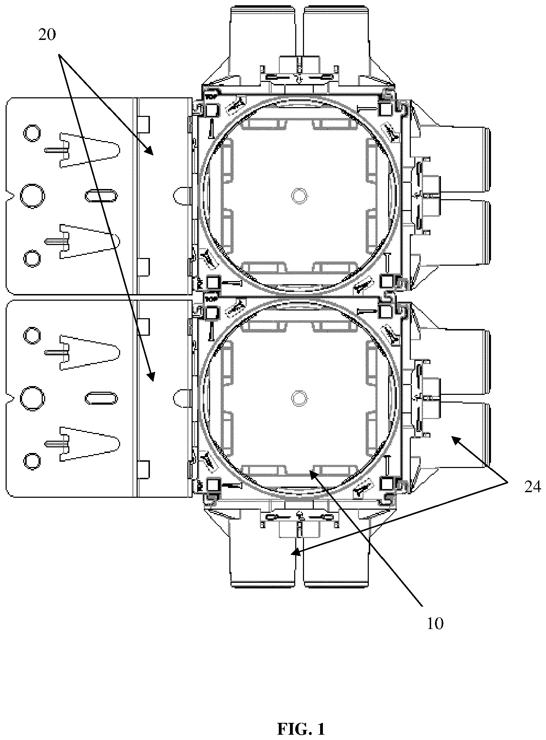

A typical electrical installation box (10) is depicted in figure 1 of the accompanying drawings, wherein the electrical installation box (10) is provided with plurality of stubs (24) and beam-fixing members (20) is attached for mounting on a beam (34). Two the similar types of electrical installation boxes (10) are adopted for docking with each other which is also illustrated in figure 1.

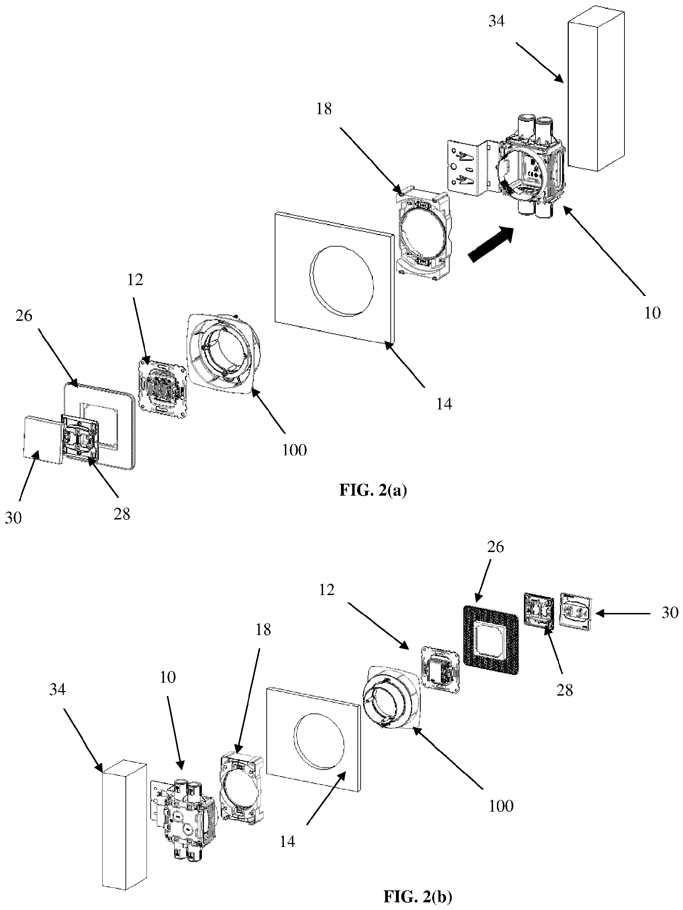

With reference to the illustration of the installation of electrical installation box (10), various components for flush mounting are shown in figures 2(a) and 2(b). The components comprise a support member (18), an electrical insert assembly having electrical inserts (12), a centerplate (30), rocker (28) and cover frame (26). These components are to be attached along the invented telescopic spacer ring assembly (100). The electrical installation box (10) is to be fixed with a board (14) having a central hole of matching profile with the entry portion (32) of the electrical installation box (10).

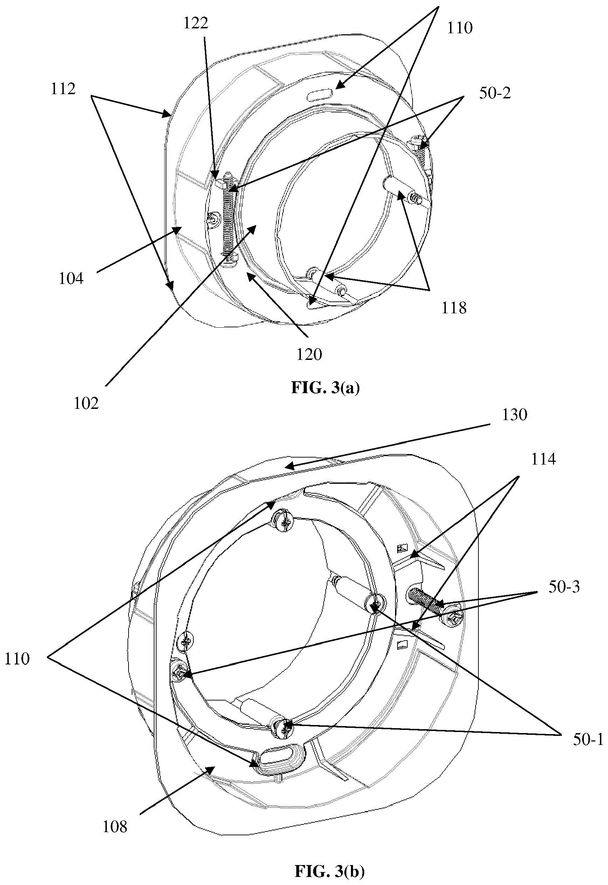

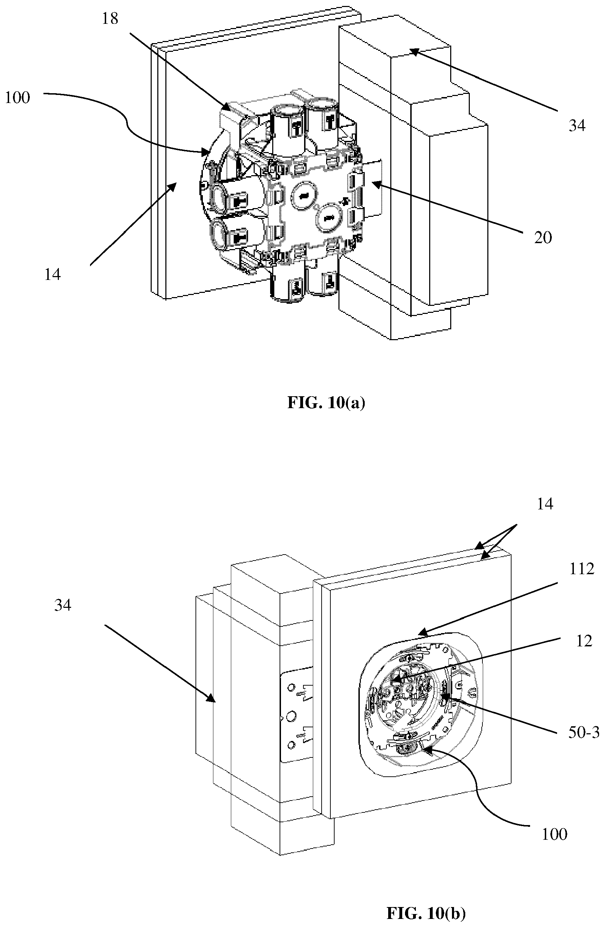

As shown in figure 3(a) of the accompanying drawings, said second ring member (104) is provided with a ring collar member (112) at a proximal end. The collar member (112) is protruding from the said proximal so as to abut on the wall from the front side for rigid fixation of said telescopic spacer ring assembly (100). As the support member (18) holds the electrical installation box (10) robust from the back side of the board (14) and the collar member(1 12) is abut on the wall such that the board (14) is sandwiched between the support member (18) and the telescopic spacer ring assembly (100) (figure 10(a)). According to this invention installer gets great flexibility with fixing nut system and clipping mechanism (38) attached to the support member (18). Support member (18) creates support structure for telescopic spacer ring assembly (100) to align the box and creates no gap between components as mentioned above so that electrical insert (12) is not project in or outside. The second ring member (104) is provided with guiding ribs (114) at its inner circumferential area for alignment and fixation of said electrical insert (12). The ribs also help to strengthen the structure of the second ring member (104) and its connection with the first ring member (102).

With reference to figures 3(a) and 3(b), said first ring member (102) is attached with the second ring member (104) with screwing mechanism that also incorporates the telescopic mechanism of the first ring member (102) to align or adjust the dimension of the installation box. The inner circumferential surface of the first ring member (102) comprises fastener receiving slots (118) for attaching insert mounting screws (50-1) connecting said first ring member (102) with said second ring member (104). Torsional forces are to be applied on the insert mounting screws (50-1) in order to actuate the telescopic mechanism.

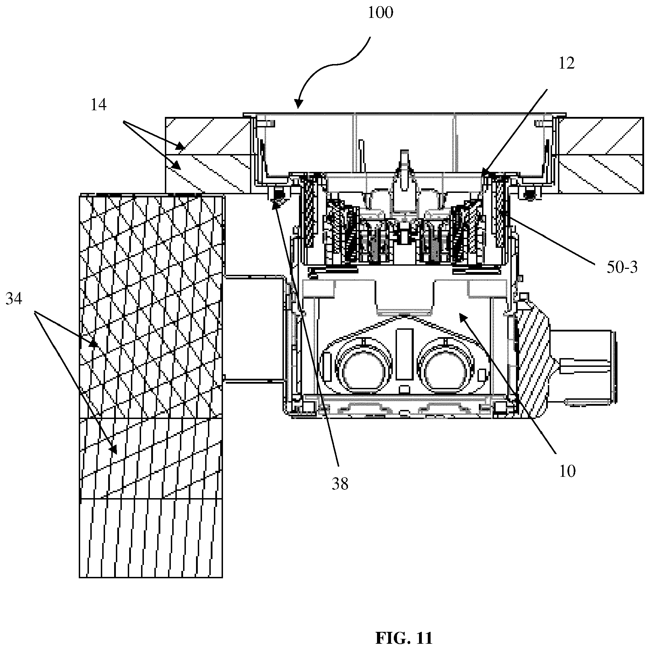

According to figures 10(a) to 11, the flush mounting of the electrical installation box (10) is achieved by the invented telescopic spacer ring assembly (100) along with the support member (18), beam-fixing member (20) attached with the installation box. Multiple dimensions of the beams (34) are taken care of by the beam-fixing member (20) that provides a robust fixation of the electrical installation box (10) with the beams (34). The support member (18) holds the electrical installation box (10) from the inner side of the wall and provides additional support to withstand any push or pull forces. The invented telescopic spacer ring assembly (100) takes care of the different dimensions of the boards (14) attached with the wall and aligns the electrical inserts (12) inside the electrical installation box (10).

In flush mounting since most if the portions of the electrical installation box (10) remains inside the wall, it becomes difficult of attain requisite support from the wall itself. For this reason, a support member (18) has been attached with installation box (10). As shown in figure 5(a), said telescopic spacer ring assembly (100) is attached to the electrical installation box (10) along with a support member (18) and mounted on a wall, said support member (18) is attached with the box by box clipping mechanism (38) and thereby facilitates additional support to the electrical installation box (10) to withstand pull out forces. Accordingly, a space relief (120) is provided in said telescopic ring assembly (figure 3(a)) for accommodating said support member (18), said space relief (120) is of matching profile with mating surface of said support member (18).

According to one object of the invention, said space relief (120) on the telescopic spacer ring assembly (100) is provided with two pairs of split holding clips (122) at for accommodating various dimensions of vertical screwing members (50-2) to align the dimension of the electrical installation box (10), said split holding clips (122) are adapted to removably attach with said support member (18). This has been depicted in figure 10(a) of the accompanying drawings. The vertical screwing members (50-2) are of preferably larger dimension to cover relatively more range of alignment and adjusting the dimension. The split holding clips (122) can be made of resilient material for press fitting different diameters of vertical screwing member (50-2).

The fixing spacer member (106) is explicitly shown in figure 5. While assembling, said fixing spacer member (106) is compressed and fixed at the inner circumferential area of the larger ring i.e. second ring member (104). The fixing spacer member (106) is resilient in nature and adapted to shrink and expand according to the forces applied to it. The fixing spacer member (106) is provide with guiding projection (124) in its inner circumferential area for mounting plurality of said electrical inserts (12). If a coordinate system is considered, said fixing spacer member (106) can be mounted in X and Y directions as well as flip over from the butting surface of the first ring member (102).

The flat annular surface of said second ring member (104) is provided with threaded receiving slots to attach screw members (50-3) and adjusting the dimension of the electrical installation box (10) from the wall by applying torsional force on said screw members (50-3). These screw members (50-3) are preferably shorter in dimension for easy mounting of the electrical inserts (12).

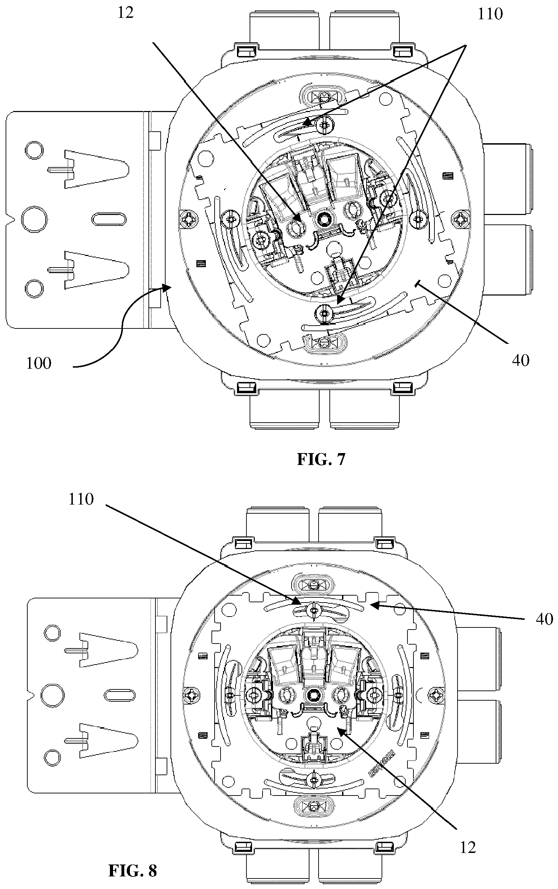

The application of the openings (110) of arcuate profile are provided in the annual surface of the second ring member (104) to align fixing frame (40) and electrical inserts (12) is illustrated in figures 7 and 8 of the accompanying drawings. The electrical inserts (12) are attached with the fixing frame (40) and inserted inside the cavity i.e. entry portion (32) of the electrical installation box (10) and attached with multiple screws. While mounting if the fixing frame (40) is not horizontal then it can be rotated in a preferable direction to attain horizontal installation. The openings (110) are of arcuate profile which facilitate easy and smooth rotation of the electrical inserts (112) and attain the state as depicted in figure 8.

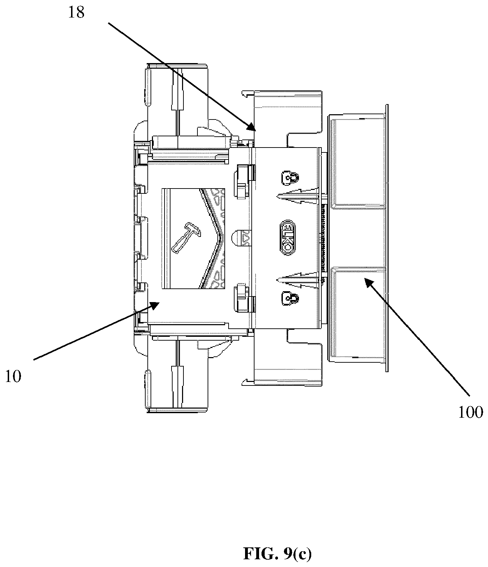

Different dimension of boards (14) and wall can be taken care with the telescopic mechanism of the invented telescopic spacer ring assembly (100). State of the telescopic spacer ring assembly (100) for different dimension is illustrated in figures 9(a) to 9(c). In figure 9(a), when less thickness of board (14) is used then the first and second ring members (102,104) are very close each other. Comparatively, in figures 9(b) and 9(c) when higher thickness of board (14) or multiple boards (14) are used, the smaller ring i.e. first ring member (102) is kept fixed with the threaded portion (36) of the electrical installation box (10), whereas the second ring member (104) projects outside in order match the dimension of the wall and board (14) combined (also in figure 10(b)).

According to one additional object of the invention, the outer surface of the second ring member (104) is provided with alternate planer surfaces (130) (shown in figure 3(a)) to accommodate at least one spirit level for alignment of the telescopic spacer ring assembly (100) and said electrical inserts (12) inside said electrical installation box (10).

As already mentioned, the foregoing description is illustrative of the invention and not limitative to its scope, because it will be apparent to persons skilled in the art to devise other alternative embodiments without departing from the broad ambit of the disclosures made herein.

## Claims

1. A telescopic spacer ring assembly (100) for an electrical installation box (10) for flush installation on a wall, said electrical installation box (10) having a threaded opening portion (36), wherein said telescopic spacer ring assembly (100) comprises:
- a first ring member (102) attached to the electrical installation box (10);
- a second ring member (104) to abut on the wall, said second ring member (104) is of substantially larger diameter than said first ring member (102), and
- a fixing spacer member (106), assembled with said second ring member (104), for fixation of multiple electrical inserts (12),
wherein, said first ring member (102) is secured with said threaded opening portion (36) of said electrical installation box (10) and configured to adjust the dimension of the electrical installation box (10) relative to the abutting wall, by telescopic action, to commensurate with the thickness of boards (14) on the wall,
and wherein said second ring member (104) is provided with flat annular surface (108) at its distal end for accommodating electrical inserts (12), said annular surface (108) is provided with openings (110) of arcuate profile for aligning said inserts (12) within the electrical installation box (10).

2. The telescopic spacer ring assembly (100) for an electrical installation box (10) for flush installation as claimed in claim 1, wherein said second ring member (104) comprising a ring collar member (112) at a proximal end for butting on the wall from the front side for rigid fixation of said telescopic spacer ring assembly (100).

3. The telescopic spacer ring assembly (100) for an electrical installation box (10) for flush installation as claimed in any of claims 1 and 2, wherein said second ring member (104) is provided with guiding ribs (114) at its inner circumferential area for alignment and fixation of said electrical insert (12).

4. The telescopic spacer ring assembly (100) for an electrical installation box (10) for flush installation as claimed in any of claims 1 to 3, wherein said first ring member (102) comprising fastener receiving slots (118) for attaching insert mounting screws (50-1) connecting said first ring member (102) with said second ring member (104).

5. The telescopic spacer ring assembly (100) for an electrical installation box (10) for flush installation as claimed in any of claims 1 to 4, wherein, said telescopic spacer ring assembly (100) is attached to the electrical installation box (10) along with a support member (18) and mounted on a wall, said support member (18) facilitates additional support to the electrical installation box (10) to withstand pull out forces.

6. The telescopic spacer ring assembly (100) for an electrical installation box (10) for flush installation as claimed in claim 5, wherein a space relief (120) is provided in said telescopic ring assembly for accommodating said support member (18), said space relief (120) is of matching profile with mating surface of said support member (18).

7. The telescopic spacer ring assembly (100) for an electrical installation box (10) for flush installation as claimed in any of claims 1 to 6, wherein said space relief (120) is provided with two pairs of split holding clips (122) at for accommodating various dimension of vertical screwing members (50-2) to align the level of the electrical installation box (10), said split holding clips (122) are adapted to removably attach with said support member (18).

8. The telescopic spacer ring assembly (100) for an electrical installation box (10) for flush installation as claimed in any of claims 1 to 7, wherein said fixing spacer member (106) is resilient in nature and adapted to assemble inside the inner circumference of said second ring member (104) with compression force.

9. The telescopic spacer ring assembly (100) for an electrical installation box (10) for flush installation as claimed in claim 8, wherein the fixing spacer member (106) comprising guiding projection (124) in its inner circumferential area for mounting plurality of said electrical inserts (12).

10. The telescopic spacer ring assembly (100) for an electrical installation box (10) for flush installation as claimed in any of claims 1 to 9, wherein the flat annular surface (108) of said second ring member (104) is provided with threaded receiving slots to attach screw members (50-3) and adjusting the level of the electrical installation box (10) from the wall by applying torsional force on said screw members (50-3).

11. The telescopic spacer ring assembly (100) for an electrical installation box (10) for flush installation as claimed in any of claims 1 to 10, wherein outer surface of the second ring member (104) is provided with alternate planer surfaces (130) to accommodate at least one spirit level for alignment of the telescopic spacer ring and said electrical inserts (12) inside said electrical installation box (10).
